# EUROPÄISCHE PATENTANMELDUNG

(11) **EP 4 670 868 A1**
(43) Veröffentlichungstag der Anmeldung: **31.12.2025**
(21) Anmeldenummer: 24184309.3
(22) Anmeldetag: 25.06.2024
(51) Int. Cl.: B21H 8/00, H01M 8/0206, B21K 23/00

(54) **VERFAHREN ZUR MASSIVUMFORMUNG VON BLECH**

(71) Anmelder: Sunfire SE, 01237 Dresden (DE); Vitesco Technologies GmbH, 93055 Regensburg (DE)
(72) Erfinder: Reichel, Ludwig, 01099 Dresden (DE); Vandercruysse, Felix, 82327, Tutzing82327, Tutzing (DE); Spura, David, 01219, Dresden (DE)
(74) Vertreter: Epping - Hermann - Fischer

(57) **Zusammenfassung**

Die vorliegende Erfindung betrifft ein Verfahren zur Massivumformung von Blech (1) mit einer Blechdicke von mindestens 0,3 mm, wobei das Blech (1) in einem ersten Walzschritt durch einen Spalt zwischen zwei Walzen (2, 3) bewegt wird, wobei eine vordere Walze (2) mittels Massivumformung erste Kanäle (4) in das Blech (1) prägt, wobei durch das Prägen mittels der vorderen Walze (2) die Rückseite (13) des Blechs (1) nicht strukturiert wird und eben bleibt. Die Erfindung betrifft weiterhin eine aus dem Blech (1) vereinzelte Bipolarplatte (10).

## Beschreibung

Die vorliegende Erfindung betrifft ein Verfahren zur Massivumformung von Blech mit einer Blechdicke von mindestens 0,3 mm und eine Bipolarplatte für elektrochemische Zellen.

Bekannte Verfahren zur Strukturierung von Blechen, die als Bipolarplatten für elektrochemische Zellen wie Elektrolysezellen, z.B. Hochtemperatur-Festoxidelektrolysezellen (englisch: solid oxide electrolyzer cells, kurz SOEC) oder PEM-Elektrolysezellen, oder Brennstoffzellen, z.B. Hochtemperatur-Festoxidbrennstoffzellen (englisch: solid oxide fuel cells, kurz SOFC) eingesetzt werden können, basieren auf Blechumformen, in denen das Blech entlang der in der Blechebene befindlichen Hauptachsen gedehnt wird. Materialfließen in Form einer Umverteilung von Stoff findet nur lokal begrenzt in den Bereichen mit hohem Umformgrad, z.B. an geformten Radien, statt. Eine unabhängige Strukturierung von Vorder- und Rückseite des Bleches ist hier nicht möglich.

Ein beispielhaftes Verfahren ist aus der Veröffentlichung DE 10 2021 122 402 A1 bekannt.

Weiterhin können Strukturen durch spanendes Bearbeiten, z.B. durch Fräsen, in Bleche eingearbeitet werden, was mit hohem Arbeits- und Werkzeugaufwand verbunden ist und für jedes Blech separat durchgeführt werden muss. Für das Fertigen großer Stückzahlen ist ein solches Verfahren daher nur bedingt geeignet.

Elektrochemisches Ätzen (ECM) bietet beispielsweise ein Verfahren, um detailgenaue Formen in die Oberflächen eines Bleches einzubringen, ist jedoch sehr aufwändig in der Umsetzung und teuer. Außerdem werden potenziell gefährliche Abfallprodukte wie Schlacke erzeugt, die separat entsorgt werden muss.

Aufgabe der vorliegenden Erfindung ist es daher, das bekannte Verfahren in Hinsicht auf die bestehenden Probleme zu verbessern.

Erfindungsgemäß wird die Aufgabe durch das Verfahren und die Vorrichtung gemäß der Ansprüche gelöst.

Insbesondere betrifft die vorliegende Erfindung ein Verfahren zur Massivumformung von Blech. Die Blechdicke, also die dünnste Abmessung des Blechs, beträgt mindestens 0,3 mm. Das Blech ist so beschaffen, dass es in elektrochemischen Zellen eingesetzt werden kann. Bevorzugt handelt es sich um ein Edelstahlblech, also ein Blech aus nichtrostendem, häufig hochlegiertem, häufig ferritischem Stahl, oder ein anderes chemisch inertes, hochtemperatur- und/oder korrosionsbeständiges Metallblech.

Das Blech weist definitionsgemäß entlang seiner beiden größten Ausdehnungsrichtungen eine Vorderseite und Rückseite auf. Vor der Bearbeitung sind die Vorderseite und die Rückseite des Blechs bevorzugt ebene, annähernd glatte Flächen. Die Flächen der Vorder- und Rückseite eines Blechs sind üblicherweise parallel zueinander.

In einem ersten Verfahrensschritt wird das Blech in einem Walzschritt durch einen Spalt zwischen zwei Walzen bewegt und somit gewalzt. Eine vordere der zwei Walzenprägt dabei mittels Massivumformung erste Strukturen in die Vorderseite des Blechs. Diese Strukturen können Kanäle oder Steg- bzw. Rippenstrukturen sein und können eine erste Fluidstruktur bilden.

Die Kanäle weisen bevorzugt eine teilzylindrische oder teilelliptische oder teiltrapezförmige, hohle Form mit einem einheitlichen Radius auf. Sie können durchgängig oder unterbrochen sein, kollinear zueinander ausgerichtet oder versetzt sein, gleichmäßig über die Plattenoberfläche verteilt oder lokal verdichtet angeordnet sein.

Statt der Kanäle kann auch eine andere Fluidstruktur ausgebildet werden, z.B. können auch Segmente auf der Oberfläche in Form von freistehenden prismatischen oder konisch zulaufenden Rippen, flachen Zylindern, also mit einer kreisrunden Konturform der Deckfläche, oder mit einer prismatischen Konturform, beispielsweise kreissegmentförmig, quadratisch, rechteckig, viereckig, dreieckig oder rautenförmig oder keilförmig, prismenförmig, prismenstumpfförmig, pyramidenförmig, pyramidenstumpfförmig, konisch oder kegelstumpfförmig ausgebildet werden, die eine Fluidstruktur bilden.

Unter einer Fluidstruktur wird hier allgemein eine Bauteil-Strukturierung verstanden, in deren miteinander verbundenen Hohlstrukturen flüssige oder gasförmige Fluide konvektiv und diffusiv transportiert werden können.

Massivumformung bedeutet im Rahmen des vorliegenden Textes, dass beim Umformen ein Materialfließen, bevorzugt in alle drei Raumrichtungen, also aus der ursprünglichen Blechebene heraus, stattfindet. Beim Massivumformen findet kein Materialabtrag wie beispielsweise beim Spanen statt.

Das Materialfließen findet erfindungsgemäß so statt, dass durch das Prägen mittels der vorderen Walze die Rückseite des Blechs zunächst nicht strukturiert wird und eben bleibt. Die Belastung durch die Walze und die Blechdicke wird entsprechend angepasst. Das Blech weist weiterhin eine genügend hohe Blechdicke und Festigkeit auf, sodass das Blech während des Walzschrittes nicht oder kaum gewölbt wird.

Vorteilig kann so eine Prägestruktur erzeugt werden, die von einer Struktur der Rückseite unabhängig ist.

Weiterhin vorteilig können mit diesem Verfahren ein Blech, eine Blechbahn oder mehrere Bleche oder Blechbahnen kontinuierlich nebeneinander und nacheinander bearbeitet werden, sodass eine hohe Bearbeitungsgeschwindigkeit und ein hoher Durchsatz während der Bearbeitung der Bleche möglich sind. Das zu bearbeitende Blech kann von einem Coil/Spule/Rolle kommen. Vom Coil kann das Blech kontinuierlich gewalzt werden, wobei kontinuierlich auch unterbrochen kontinuierlich bedeuten kann.

Der zuvor beschriebene Bearbeitungsschritt kann mit demselben Walzgerät vorteilhafterweise mindestens 60-mal pro einer Minute, vorzugsweise mindestens 300-mal pro einer Minute, noch bevorzugter mehr als 10-mal pro einer Sekunde, wiederholt werden.

Bevorzugt weist die vordere Walze eine Profilierung zum Prägen auf, anhand der die gewünschte Struktur auf der Vorderseite des Blechs geprägt werden kann.

Bevorzugt weist die vordere Walze eine Profilierung mit variierender Form und Tiefe auf, um abhängig vom Materialfluss in verschiedenen Abschnitten des Blechs erste Kanäle mit homogener Form und Tiefe zu prägen. Weiterhin kann eine Variation der Form und Tiefe der Profilierung z.B. vom Abstand der Walzenachse zum Blech abhängen. Bevorzugtes Ziel ist es, dass die Kanäle und die sie abgrenzenden Stege oder Rippen im Querschnitt gleichförmig und gleichmäßig ausgeprägt werden.

Gleichförmige Kanäle können parallel zueinander oder andersartig ausgerichtet sein, z.B. einander kreuzend oder labyrinthartig.

Weiter können die Profilierung der Walzen andere Formen als Kanäle in das Blech einbringen, beispielsweise Segmente in Form von Pins, flachen Zylindern, also mit einer kreisrunden Konturform, oder mit einer Konturform aus der Auswahl kreissegmentförmig, quadratisch, rechteckig, viereckig, dreieckig oder rautenförmig oder keilförmig, prismenförmig, prismenstumpfförmig, pyramidenförmig, pyramidenstumpfförmig, konisch oder kegelstumpfförmig, die auf dem Blech eine Fluidstruktur ausbilden.

Gemäß einer Ausführungsform weist eine hintere Walze, die der Rückseite des Blechs gegenüberliegt, eine Zylinderform ohne Profilierung auf. Die hintere Walze ist eine der zwei Walzen, die den Spalt bilden. Eine hintere Walze ohne Profilierung ermöglicht es, dass im Walzschritt keine Strukturierung auf der Rückseite des Blechs stattfindet.

Gemäß einer Ausführungsform werden durch die hintere Walze, die der Rückseite des Blechs gegenüberliegt, mittels Massivumformung eine zweite Fluidstruktur, insbesondere zweite Kanäle (oder eine andere Struktur als Kanäle, wie oben genannt) in das Blech geprägt, deren Form und Struktur nicht von den ersten Kanälen abhängig sind, wobei durch das Prägen mittels der hinteren Walze die Vorderseite des Blechs nicht zusätzlich strukturiert wird und eben bleibt.

Unter Prägen wird im vorliegenden Text bevorzugt insbesondere Walzenprägen nach DIN 8583 verstanden.

Statt Kanälen kann im Rahmen der vorliegenden Erfindung auch, auch auf der Rückseite des Blechs, eine andersartige Fluidstruktur, wie oben genannt, vorliegen oder ausgebildet werden.

Die hintere Walze weist gemäß dieser Ausführungsform auch eine Profilierung zum Prägen auf. Die Profilierung kann, muss aber nicht, dieselbe sein wie die der vorderen Walze. Das Prägen durch die hintere Walze hat bevorzugt keinen Einfluss auf die Struktur auf der Vorderseite. Die Strukturierung der Rückseite ist somit vollkommen unabhängig von der Strukturierung der Vorderseite. Die Kanäle an der Vorder- und der Rückseite des Blechs können beispielsweise in verschiedene Richtungen ausgerichtet sein.

Das gleichzeitige Strukturieren der Vorder- und Rückseite kann das Herstellungsverfahren der Bleche beschleunigen und vereinfachen.

Gemäß einer Ausführungsform können zwei der Bleche an den Rückseiten aneinandergelegt werden und durch einen Spalt zwischen zwei der vorderen Walzen bewegt werden, wobei jeweils eine der zwei vorderen Walzen jeweils einer der Vorderseiten der zwei Bleche gegenüberliegt, sodass mittels Massivumformung erste Kanäle in die zwei Bleche geprägt werden, wobei durch das Prägen mittels der vorderen Walzen die Rückseiten der zwei Bleche nicht strukturiert werden und eben bleiben und wobei die Struktur und Form der ersten Kanäle der zwei Bleche jeweils unabhängig voneinander sind.

Zwischen den zwei Blechen kann ein Trennmittel oder ein Schmiermittel, zum Beispiel ein Öl, aufgetragen sein, auch um ein Verkratzen oder Verschweißen der Bleche zu verhindern.

Auch diese Ausführungsform bietet eine Möglichkeit, das Verfahren zu beschleunigen, indem der Durchsatz bei der Bearbeitung der Vorderseiten der Bleche erhöht wird, nämlich bis zu verdoppelt wird. Anschließend können die Bleche auch umgedreht werden und eine analoge Strukturierung der Rückseiten der Bleche kann stattfinden. Auch hier hängen die Strukturen an Vorder- und Rückseite nicht voneinander ab. Das heißt im Rahmen des vorliegenden Textes, die Strukturen können komplett verschieden ausgeprägt sein und beeinflussen sich nicht gegenseitig.

Bevorzugt werden die ersten Kanäle in einem oder mehreren ersten Teilbereichen der Vorderseite strukturiert, während ein oder mehrere zweite Teilbereiche der Vorderseite nicht strukturiert werden.

Gleiches gilt auch für die optionale Strukturierung der Rückseite. Auch alle weiteren folgenden optionalen Merkmale und Strukturierungsformen können genauso auf der Rückseite wie auf der Vorderseite ausgeführt sein. Die Strukturierung der Vorder- und der Rückseite ist immer unabhängig voneinander.

Beispielsweise können in verschiedenen ersten Teilbereichen Kanäle verschiedener Formen, Abmessungen, Abstände und Ausrichtungen strukturiert werden. Innerhalb eines ersten Teilbereichs sind die Kanäle bevorzugt homogen, gleichförmig, parallel mit jeweils der gleichen Tiefe und mit regelmäßigen Abständen ausgebildet.

Zweite Teilbereiche sind Bereiche, in denen kein regelmäßiges Muster an Kanälen ausgebildet ist und auch keine Kanäle strukturiert sind. Ein solcher Teilbereich hat zumindest größere Abmessungen in der Blechebene als der Abstand zweier Kanäle in einem ersten Teilbereich beträgt.

Solche zweiten Teilbereiche können optional in Randbereichen des Blechs ausgebildet sein, so dass die Kanäle in der Blechebene seitwärts abgeschlossen sind. Alternativ können die Kanäle auch bis zum Rand der Bleche reichen und somit zur Seite des Bleches hin geöffnet sein.

Alternativ können zweite Teilbereiche auch zentral oder an beliebiger Stelle auf dem Blech ausgebildet sein.

Zur Bildung der ersten strukturierten und der zweiten nicht strukturierten Teilbereiche weist die vordere Walze bevorzugt sowohl profilierte Segmente wie auch nicht profilierte Segmente auf der Walzenoberfläche auf. Alternativ kann auch der Abstand zwischen dem Blech und der vorderen Walze variiert werden.

Gleiches kann jeweils auch für die hintere Walze gelten.

Verschiedene Segmente auf den Walzenoberfläche können jeweils verschieden profiliert sein. Der Begriff "Segment" bezieht sich erfindungsgemäß auf Zylindersegmente der Walze, also einen begrenzten Winkelbereich der Walzenoberfläche, oder auch auf unterschiedliche axiale Abschnitte der Walze. Die profilierten Segmente sind bevorzugt die Negative zu den positiven Prägestrukturen auf den Blechen. Die Profilierungen können gezielte Freiräume aufweisen oder auf der Walzenoberfläche schaffen, in die das umgeformte Material bevorzugt fließt.

Die Profilierungen können als erhabene Abschnitte auf der Mantelfläche der ansonsten zylindrischen Walze ausgeführt sein. Die Erhebungen können verschiedene Längen, Formen und Ausrichtung haben.

Die Segmente können entlang der Achse der Walze (quer zur Walzrichtung) nebeneinander oder entlang der Umfangsrichtung der Walze (Walzrichtung) hintereinander angeordnet sein. Zwischen den profilierten Segmenten können Segmente ohne Profilierung angeordnet sein.

Bevorzugt werden die zweiten Teilbereiche während des ersten Walzschritts oder in einem zweiten Walzschritt flacher gewalzt, sodass die maximalen Blechdicken der ersten und der zweiten Teilbereiche gleich groß sind. Dies kann bereits durch Kalandrieren mit nicht-profilierten Oberflächen der Walzen des ersten Walzschrittes erfolgen. Alternativ oder optional können weitere Walz- oder Kalandrierschritte mit weiteren Walzen erfolgen.

Somit werden Verspannungen oder Verformungen des Blechs oder Rissbildung im Blech aufgrund von verschiedenen walzbedingten Längungen in verschiedenen Teilbereichen des Blechs vermieden.

Bevorzugt werden während des Prägens der Kanäle Stege (im vorliegenden Text auch Rippen genannt) zwischen den Kanälen ausgebildet. Stege sind die vorstehenden Strukturen oder Abschnitte zwischen den eingeprägten Kanälen. Stege zählen zu den ersten, strukturierten Teilbereichen. Bevorzugt bilden die Stege eine plane und ebene Oberfläche, die bevorzugt nur von den Kanälen unterbrochen ist. D.h. die Stege zumindest eines Teilbereichs des Bleches oder des gesamten Bleches haben dieselbe Höhe und können somit beispielsweise als Träger- und Stützflächen oder als elektrische Kontaktierungsflächen fungieren. Die hohen Anforderungen an Ebenheit und Parallelität der Stegflächen können optional durch einen Folgewalzschritt, d.h. einen zusätzlichen, folgenden Kalandrierschritt bzw. ein Kalandrierwalzen, eingestellt werden.

Die Stege und die Kanäle zumindest eines Teilbereichs des Blechs oder des ganzen Bleches sind bevorzugt gleich ausgerichtet und parallel zueinander. Ebenfalls sind die Stege des Teilbereichs wie die Kanäle ausgerichtet und parallel zu den Kanälen angeordnet.

Bevorzugt wird das Verfahren kontinuierlich durchgeführt. D.h. das wird bevorzugt kontinuierlich Blech beispielsweise von einer Spule abgewickelt und den Walzen zugeführt. Neben dem ersten Walzschritt können weitere vor- und nachgelagerte Schritte, bevorzugt kontinuierlich durchgeführt werden.

In einem optionalen nachgelagerten Folgewalzschritt wird die Blechdicke homogen flacher gewalzt, also die Dicke des Bleches wird reduziert, und somit die Tiefe der Kanäle angepasst, d.h. auf die einzustellende Tiefe reduziert. Im bevorzugten Fall sollte aus Gründen der Materialersparnis die Kanaltiefe einen Großteil der Blechdicke ausmachen.

In einem oder mehreren optionalen Folgewalzschritten oder Kalandrierschritten können unerwünschte Wölbungen des Bleches sowohl in der Walzrichtung durch Walzrichten wie auch quer zu der Walzrichtung durch entsprechend angeordnete konvexkonkave Walzenpaarungen mittels entsprechend angeordneter Walzen oder Kalander durch Blechformen begradigt oder entfernt werden.

In einem optionalen nachgelagerten Schritt werden durch Planglühen Verformungen und Verspannungen im Blech reduziert. Das Glühen findet bevorzugt kontinuierlich oder batchweise nach der Vereinzelung des Bleches statt. Das Planglühen findet bevorzugt nach einem Reinigungsschritt statt (siehe folgender Absatz).

In einem optionalen nachgelagerten Schritt wird das Blech von für die Verarbeitung aufgebrachtem Ziehöl gereinigt. Das Reinigen findet bevorzugt kontinuierlich oder batchweise nach der Vereinzelung des Bleches statt. Das Reinigen findet bevorzugt vor dem Planglühen statt, kann aber auch nach dem Planglühen wiederholt werden.

Weitere Nachbearbeitungsschritte sind nicht erforderlich, können aber optional kontinuierlich oder batchweise durchgeführt werden.

In einem optionalen nachgelagerten Schritt werden aus dem Blech Bipolarplatten für den Einbau in elektrochemischen Zellen wie z.B. Elektrolysezellen oder Brennstoffzellen vereinzelt, bevorzugt gestanzt oder lasergeschnitten.

Die Bipolarplatten sind bevorzugt für den Einbau in SOECs bzw. in SOFCs ausgebildet.

In einer Ausführungsform wird das Blech zuerst kontinuierlich durch Blechschneiden vereinzelt und werden anschließend in einem weiteren Prozessschritt die formgenauen Bipolarplatten ausgestanzt oder lasergeschnitten.

Die Stege sind bevorzugt so geformt, dass die Stege im Aufbau der elektrochemischen Zellen als konstruktive, bevorzugt tragende, Elemente und/oder als elektrische Leitungspfade fungieren.

Insbesondere können die äußeren Oberflächen der Stege in Kontakt mit benachbarten Bauelementen in den Elektrolysezellen oder Brennstoffzellen stehen, so dass die Stege als Stromleitungspfade in Richtung der Bipolarplatte benachbarten Bauelemente in den Elektrolysezellen oder Brennstoffzellen fungieren.

Benachbart ist hierbei bevorzugt die dünne Festoxidelektrolytzelle, also die Membran-Elektroden-Einheit (englisch: membrane-electrode-assembly, kurz MEA), angeordnet. Zwischen der Festoxidelektrolytzelle bzw. der MEA und den Stegen ist bevorzugt ein metallisches Netz, wie beispielsweise ein Nickelnetz, angeordnet. Das Nickelnetz ist bevorzugt in direktem Kontakt mit den Oberflächen der Stege und der MEA. Die Stege weisen dazu bevorzugt eine einheitliche Höhe auf und haben genügend große Oberflächen, die als Auflageflächen fungieren.

Weiterhin können die Stege als mechanische Stützelemente der Membran in den Elektrolysezellen oder Brennstoffzellen fungieren. Da die Membran der Festoxidelektrolytzelle, insbesondere die keramische Membran, die als Elektrolyt fungiert, sehr dünn sein kann, insbesondere unter 100 µm (Mikrometer) dünn, bevorzugt unter 50 µm dünn, weisen die äußeren Oberflächen der Stege bevorzugt eine Planheit im einstelligen Mikrometerbereich auf.

Teil der Erfindung sind neben dem beschriebenen Verfahren auch Bipolarplatten für elektrochemische Zellen, insbesondere für Elektrolysezellen oder Brennstoffzellen. Die Bipolarplatten können alle Merkmale aufweisen, die zuvor in Bezug auf das Verfahren beschrieben worden sind. Insbesondere kann es sich um verfahrensgemäß hergestellte Bipolarplatten handeln.

Auch die hier beschriebenen weiteren Merkmale der Bipolarplatten können bevorzugte Ausführungsformen des zuvor beschriebenen Verfahrens sein.

Eine erfindungsgemäße Bipolarplatte weist eine Vorderseite und eine entgegengesetzt gerichtete Rückseite auf und hat eine Prägestruktur, die an der Vorderseite der Bipolarplatte in Form von Kanälen und Stegen ausgebildet ist. Die Tiefe der Kanäle entspricht dabei maximal 60 %, bevorzugt der Hälfte der Dicke der Bipolarplatte und die Rückseite der Bipolarplatte ist eben und weist keine Prägestruktur auf. Ein solches Verhältnis stellt sicher, dass während der Herstellung im Walzverfahren kein Blechumformen, sondern nur Prägen durch Materialfluss stattfindet.

Im Folgenden werden weitere Ausführungsformen der Erfindung beispielhaft anhand von Figuren erläutert. Alle optionalen Merkmale können unabhängig von der Beschreibung beliebig in geeigneter Weise miteinander kombiniert werden. Größenverhältnisse und Abmaße können von den in den Figuren gezeigten Verhältnissen abweichen.

Die Erfindung ist nicht auf die beispielhaften Ausführungen beschränkt.
Figur 1 zeigt schematisch den Bearbeitungsprozess eines Bleches von zwei verschiedenen Seiten mittels zwei Walzen.
Figur 2 zeigt schematisch den Bearbeitungsprozess zweier an den jeweiligen Rückseiten aneinander liegender Bleche mittels zwei Walzen.
Figur 3 zeigt schematisch eine perspektivische Ansicht der durch den Walzvorgang mit Kanälen und Stegen strukturierten Bipolarplatten.

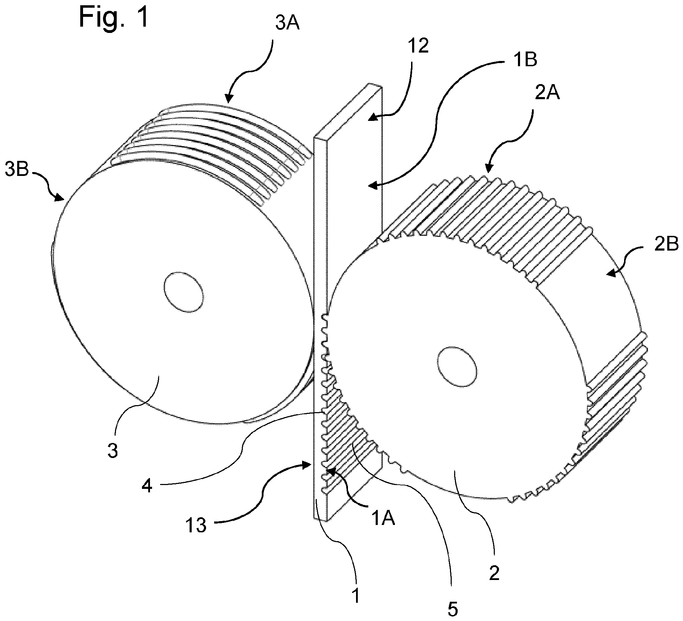

Figur 1 zeigt den Herstellungsprozess.

Hier wird ein Blech 1, beispielsweise ein Edelstahlblech oder ein anderes Metallblech, kontinuierlich durch den Spalt zwischen zwei Walzen 2 und 3 bewegt bzw. gezogen. Das Blech 1 wird bevorzugt kontinuierlich von einer Spule abgewickelt, die hier nicht dargestellt ist.

Neben Edelstahlblechen sind weitere Stahlbleche, insbesondere ferritische Stahlbleche, denkbar.

Die Walze 2 liegt hier definitionsgemäß einer Vorderseite 12 des Blechs 1 gegenüber. Die Walze 2 weist Profilierungen auf, durch die, wie in Figur 1 zu sehen ist, eine Strukturierung der Vorderseite 12 des Bleches 1 vorgenommen wird.

Die Profilierung auf der Walze 2 in den ersten Segmenten 2A besteht in Erhebungen, die eine Längsrichtung parallel zur Walzenachse aufweisen. Die Erhebungen entsprechen bevorzugt einer Struktur, die dem Negativ der in einem ersten Teilbereich 1A des Bleches durch die Walze 2 eingeprägten Kanäle 4 ähnelt oder gleicht. Im Realfall entsprechen die gewalzten Strukturen infolge elastischer Rückverformungen meist nicht genau, aber näherungsweise dem Negativ der Walzenstruktur.

Bevorzugt sind die Erhebungen auf den Walzen abgerundet geformt, d.h. sie weisen mindestens einen Radius auf. Bevorzugt sind die Erhebungen halbelliptisch, hyperelliptisch oder halbzylindrisch, anders teilzylindrisch oder prismenförmig mit abgerundeten Kanten geformt.

Das Umformen des Bleches 1 durch die Walzen findet wie zuvor beschrieben durch Massivumformen, d.h. durch Materialfluss im Blech 1, und bevorzugt explizit nicht durch Blechformen statt.

Weiterhin weist die Walze 2 unprofilierte Segmente 2B auf, die frei von Erhebungen sind und glatte Oberflächen aufweisen (unstrukturierte Zylindermantelfläche). Diese Segmente 2B der Walze 2 prägen keine Struktur auf die Vorderseite 12 des Bleches 1, sodass hier zweite, nicht strukturierte Teilbereiche 1B gebildet werden.

Da sich die Profilierung in den Segmenten 2A im gezeigten Beispiel über die gesamten Achsenlängen der Walze 2 erstreckt und die Walze mindestens die Abmessung des Bleches in der Achsenrichtung aufweist, werden die Kanäle 4 im ersten Teilbereich 1A über die gesamte Ausdehnung des Bleches strukturiert.

Alternativ können durch entsprechend kürzere Erhebungen auf der Walze 2 kürzere Kanäle 4, die sich nicht über die gesamte Ausdehnung des Bleches 1 erstrecken, strukturiert werden.

Im gezeigten Beispiel wird zum in Figur 1 gezeigten Zeitpunkt gerade keine Struktur durch die Walze 3 auf die Rückseite 13 des Bleches 1 geprägt, da ein unprofiliertes Segment 3B zum Blech 1 gerichtet ist. Auf der Rückseite liegt hier somit ein nicht-strukturierter zweiter Teilbereich vor.

Die Walze 3 weist jedoch auch profilierte Segmente mit Erhebungen, die sich entlang der Umfangsrichtung der Walze 3 erstrecken, auf.

Diese profilierten Segmente 3A prägen strukturierte erste Teilbereiche auf die Rückseite 13 des Bleches 1, wobei die eingeprägten Kanäle quer zu den Kanälen auf der Vorderseite des Bleches verlaufen.

Die Strukturierungen auf der Vorder- und Rückseite des Bleches 1 sind also unabhängig voneinander und können z.B. deckungsgleich, zueinander verschoben oder vollständig versetzt angeordnet sein.

Aufgrund der Struktur der profilierten Segmente 3A auf der Walze 3 beginnen und enden die auf der Rückseite 13 eingeprägt Kanäle innerhalb der Oberfläche des Bleches 1, sind also abgeschlossen (diskontinuierliche Struktur).

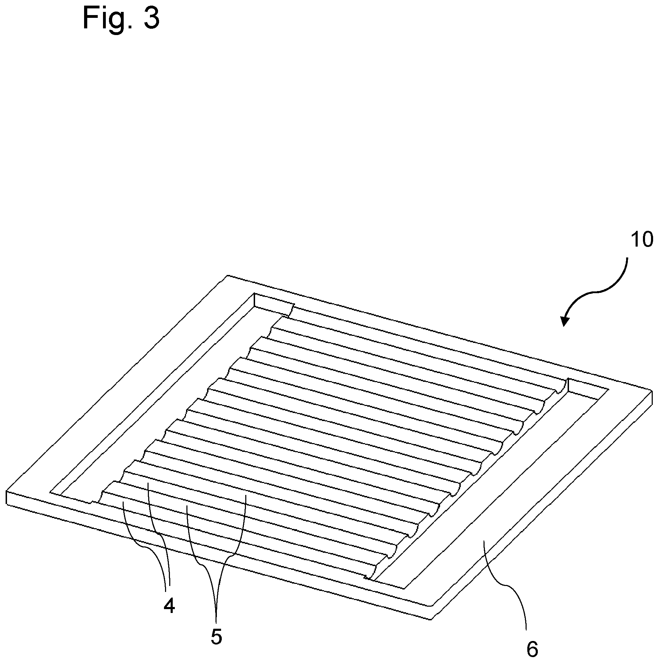

Die Tiefe der Kanäle 4 und die gesamte Dicke des Bleches 1 bzw. der Bipolarplatte 10 (siehe Figur 3) kann durch nachfolgendes Kalandrieren eingestellt bzw. angepasst werden.

Die Bipolarplatten 10 werden aus dem Blech 1 mit aufgeprägten Strukturen vereinzelt, z.B. ausgestanzt.

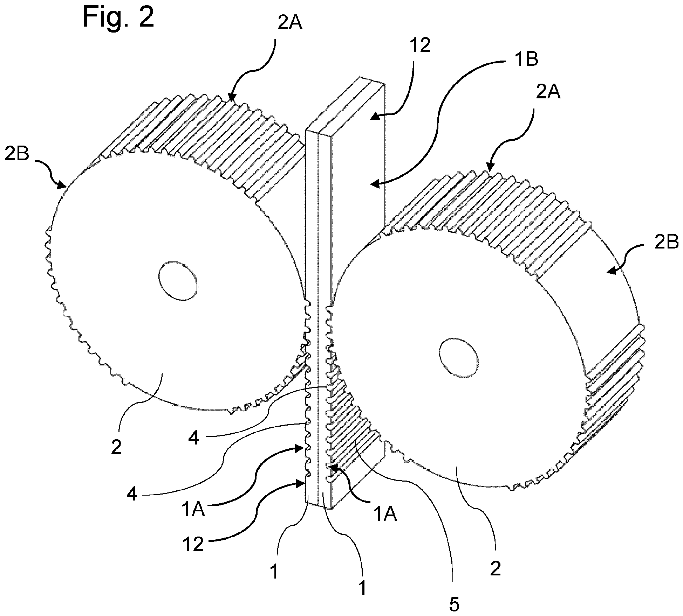

Figur 2 zeigt eine mögliche Modifikation des Herstellungsprozesses. Es ist gezeigt, wie zwei der Bleche 1 an ihren jeweiligen Rückseiten 13 aneinandergelegt werden und zwischen zwei der vorderen Walzen 2 hindurchbewegt werden, wobei jede der zwei vorderen Walzen 2 mittels Massivumformung wiederum die Kanäle 4 in die jeweils gegenüberliegende Vorderseite 12 der zwei Bleche 1 prägt.

Vorteil dieser Modifikation ist, dass zwei Bleche 1 parallel bearbeitet werden können.

In die Rückseiten 13 werden während dieses Schrittes keine Fluidstrukturen geprägt. Anschließend können die Bleche optional an den Vorderseiten 12 aneinandergelegt werden und in die Rückseiten 13 können durch zwei hintere Walzen 3 Fluidstrukturen analog geprägt werden.

Im Übrigen wird das Verfahren wie in Bezug auf Figur 1 beschrieben durchgeführt.

Figur 3 zeigt schematisch und beispielhaft eine erfindungsgemäße hergestellte Bipolarplatte 10, z.B. für den Einsatz in einer elektrochemischen Zelle wie einer Elektrolysezelle oder einer Brennstoffzelle.

Die Bipolarplatte 10 weist durch Walzen eingeprägte Kanäle 4 auf. Die Kanäle 4 sind nur auf einer Oberfläche der Bipolarplatte 10 ausgeprägt.

Auf der Rückseite der Bipolarplatte 10 sind keine Kanäle ausgeprägt. Auch ist die Bipolarplatte 10 nicht andersartig verformt, beispielsweise durch Blechumformen.

Die Kanäle 4 sind bevorzugt rund ausgeführt, das heißt sie weisen einen Radius und keine scharfen Ecken auf, da sich solche Strukturen einfacher in die Bipolarplatte 10 einprägen lassen Zusätzlicher Vorteil ist ein geringerer Werkzeugverschleiß.

Die Stege 5, d.h. die Erhebungen zwischen den Kanälen 4, sind parallel zu den Kanälen 4 und parallel untereinander angeordnet und alle gleich ausgerichtet.

Die Gesamtheit der Kanäle 4 und Stege 5 bildet eine sogenannte Flowfield-Struktur.

Die Oberflächen der Stege 5 bilden eine ebene, planare, nur durch die Kanäle 4 unterbrochene Fläche, die z.B. als Träger für eine Membran oder zur elektrischen Kontaktierung dienen kann.

Die Kanäle 4 dienen in der elektrochemischen Zelle bevorzugt zur Zuführung bzw. Abführung von Fluiden und/oder Gasen, insbesondere auf einer ersten Seite (Vorder- oder Rückseite) von bei der Elektrolyse zuzuführendem Wasserdampf oder abzuführendem Wasserstoff. Die Kanäle auf einer zweiten Seite (Rück- oder Vorderseite), die kein Wasserstoff führen, können dann Luft und den entstehenden Sauerstoff zu- bzw. abführen.

Die Kanäle 4 fördern das Fluid bzw. Gas bevorzugt mit einer homogenen Strömung und weisen ein möglichst großes Volumen auf.

Das Verhältnis von Stegbreite zu Steghöhe bzw. Kanalhöhe ist weiterhin bevorzugt hoch, um eine hohe konstruktive Stabilität zu erhalten.

In einer Ausführung als Brennstoffzelle dienen die Kanäle 4 zum Zuführen von Luft bzw. Sauerstoff und Abführen von Luft auf einer ersten Seite oder zum Zuführen von Brennstoff, insbesondere Wasserstoff, und Abführen von Wasserdampf auf einer zweiten Seite.

Die nicht strukturierten Teilbereiche 6 neben den Stegen 5 und den Kanälen 4 dienen insbesondere der Konstruktion der elektrochemischen Zellen beim Zusammenbau und der Abdichtung.

Die Bipolarplatte 10 kann aber auch in anderen Anwendungen als elektrochemische Zellen, beispielsweise auch in Wärmetauschern oder in anderen thermischen oder fluidmechanischen Vorrichtungen eingesetzt werden.

### Bezugszeichenliste

1 Blech
1A strukturierter erster Teilbereich
1B unstrukturierter zweiter Teilbereich
12 Vorderseite des Blechs
13 Rückseite des Blechs
2 vordere Walze
2A Segmente mit Profilierung
2B Segmente ohne Profilierung
3 hintere Walze
3A Segmente mit Profilierung
3B Segmente ohne Profilierung
4 Kanäle
5 Stege
6 unstrukturierte Teilbereiche/Randbereich
10 Bipolarplatte

## Patentansprüche

1. Verfahren zur Massivumformung von Blech (1) mit einer Blechdicke von mindestens 0,3 mm, wobei das Blech (1) eine Vorderseite (12) und eine entgegengesetzt gerichtete Rückseite (13) aufweist,
wobei das Blech (1) in einem ersten Walzschritt durch einen Spalt zwischen zwei Walzen (2, 3) bewegt wird,
wobei eine vordere Walze (2), die der Vorderseite (12) des Blechs (1) gegenüberliegt, mittels Massivumformung eine erste Fluidstruktur in das Blech (1) prägt,
wobei durch das Prägen mittels der vorderen Walze (2) die Rückseite (13) des Blechs (1) nicht strukturiert wird und eben bleibt.

2. Verfahren nach Anspruch 1, wobei die erste Fluidstruktur durch Kanäle (4) ausgebildet wird.

3. Verfahren nach Anspruch 1 oder 2, wobei die vordere Walze (2) eine Profilierung (2A) zum Prägen aufweist.

4. Verfahren nach einem der Ansprüche 1 bis 3, wobei die vordere Walze (2) eine Profilierung (2A) mit variierender Form und Tiefe aufweist, um abhängig vom Materialfluss in verschiedenen Abschnitten des Blechs (1) die erste Fluidstruktur mit homogener Form und Tiefe zu prägen.

5. Verfahren nach einem der Ansprüche 1 bis 4, wobei eine hintere Walze (3), die der Rückseite (13) des Blechs (1) gegenüberliegt, eine Zylinderform ohne Profilierung aufweist oder wobei eine hintere Walze (3), die der Rückseite (13) des Blechs (1) gegenüberliegt, mittels Massivumformung eine zweite Fluidstruktur in das Blech (1) prägt, deren Form und Struktur nicht von der ersten Fluidstruktur abhängig ist.

6. Verfahren nach Anspruch 5, wobei die zweite Fluidstruktur durch Kanäle (4) ausgebildet wird.

7. Verfahren nach einem der Ansprüche 1 bis 4, wobei zwei der Bleche (1) an den Rückseiten (13) aneinandergelegt werden und durch einen Spalt zwischen zwei der vorderen Walzen (2) bewegt werden, wobei jeweils eine der zwei vorderen Walzen (2) jeweils einer der Vorderseiten (12) der zwei Bleche (1) gegenüberliegt, sodass mittels Massivumformung erste Fluidstrukturen in die zwei Bleche (1) geprägt werden, wobei durch das Prägen mittels der vorderen Walzen (2) die Rückseiten (13) der zwei Bleche nicht strukturiert werden und eben bleiben und wobei die Struktur und Form der ersten Fluidstrukturen der zwei Bleche (1) jeweils unabhängig voneinander sind.

8. Verfahren nach einem der Ansprüche 1 bis 7, wobei die erste Fluidstruktur in einem oder mehreren ersten Teilbereichen (1A) der Vorderseite (12) strukturiert wird, während ein oder mehrere zweite Teilbereiche (1B,6) der Vorderseite (12) eben bleiben und nicht strukturiert werden.

9. Verfahren nach Anspruch 8, wobei zur Bildung der ersten strukturierten und der zweiten nicht strukturierten Teilbereiche (1A, 1B) die vordere Walze (2) sowohl profilierte Segmente (2A) wie auch unstrukturierte Segmente (2B) auf der Walzenoberfläche aufweist und/oder der Abstand zwischen dem Blech (1) und der vorderen Walze (2) variiert wird und/oder wobei die zweiten Teilbereiche (1B) während des ersten Walzschritts oder in einem zweiten Walzschritt flacher gewalzt werden, sodass die maximalen Blechdicken der ersten und der zweiten Teilbereiche (1A, 1B) verschieden sind.

10. Verfahren nach einem der Ansprüche 1 bis 9, wobei während des Prägens der Fluidstrukturen Kanäle (4) und Stege (5) zwischen den Kanälen (4) ausgebildet werden, wobei die Stege (5) eine plane Oberfläche bilden, die von den Kanälen (4) unterbrochen ist und/oder wobei die Stege (5) und die Kanäle (4) parallel zueinander ausgebildet werden.

11. Verfahren nach Anspruch 8 und nach Anspruch 10, wobei die Stege (5) und die Kanäle (4) jeweils eines ersten Teilbereichs parallel zueinander ausgebildet werden.

12. Verfahren nach einem der Ansprüche 1 bis 11, wobei in einem Folgewalzschritt die Blechdicke flacher gewalzt wird und somit die Tiefe der Fluidstrukturen angepasst wird und/oder wobei in einem Folgewalzschritt Wölbungen des Bleches (1) entfernt werden.

13. Verfahren nach einem der Ansprüche 1 bis 12, wobei durch Planglühen in einem Folgeschritt Verformungen und Verspannungen im Blech (1) reduziert werden und/oder wobei das Blech (1) in einem Folgeschritt von Ziehöl gereinigt wird.

14. Verfahren nach einem der Ansprüche 1 bis 13, wobei aus dem Blech (1) in einem Folgeschritt Bipolarplatten (10) für den Einbau in Elektrolysezellen oder Brennstoffzellen, bevorzugt durch Stanzen, vereinzelt werden und/oder wobei die Stege (5) als Stromleitungspfade in Richtung der Bipolarplatte (10) benachbarter Bauelemente in den Elektrolysezellen oder Brennstoffzellen fungieren und/oder wobei die Stege (5) als mechanische Stützelemente einer Membran in den Elektrolysezellen oder Brennstoffzellen fungieren.

15. Bipolarplatte (10) für Elektrolysezellen oder Brennstoffzellen, wobei die Bipolarplatte (10) eine Vorderseite (12) und eine entgegengesetzt gerichtete Rückseite (13) aufweist, mit einer Prägestruktur, die an der Vorderseite (12) der Bipolarplatte (10) in Form einer Fluidstruktur ausgebildet ist, wobei die Tiefe der Fluidstruktur maximal der Hälfte der Dicke der Bipolarplatte (10) entspricht und wobei die Rückseite (13) der Bipolarplatte (10) eben ist und keine Prägestruktur aufweist.

16. Bipolarplatte nach Anspruch 15, wobei die Fluidstruktur durch Kanäle (4) und Stege (5) ausgebildet ist.
